# EUROPEAN PATENT APPLICATION

(11) **EP 4 773 119 A1**
(43) Date of publication of application: **08.07.2026**
(21) Application number: 25221407.7
(22) Date of filing: 08.12.2025
(51) Int. Cl.: G08G 5/21, B64D 47/08, G08G 5/51, G08G 5/80

(54) **RUNWAY VEER-OFF AVOIDANCE SYSTEM**

(30) Priority: 02.01.2025 US 202519008367
(71) Applicant: Honeywell International Inc., Charlotte, NC 28202 (US)
(72) Inventor: CHEN, Xiaodong, Charlotte, 28202 (US); WU, Kun, Charlotte, 28202 (US); ZOU, Yunfei, Charlotte, 28202 (US); HE, Zuowei, Charlotte, 28202 (US)
(74) Representative: Haseltine Lake Kempner LLP

(57) **Abstract**

A system including: avionics circuitry for an aircraft; one or more image sensors configured to acquire image data around the aircraft; and processing circuitry in communication with the avionics circuitry and the one or more image sensors, wherein the processing circuitry is configured to: receive, from the avionics circuitry, operational data of the aircraft; identify, based on the image data, one or more runway features for a runway along which the aircraft is traveling; determine, based on the operational data and the image data, whether the aircraft is maintaining a correct heading; and control, based on the determination, the aircraft to prevent runway excursion.

## Description

### TECHNICAL FIELD

This disclosure relates to alignment systems for vehicles.

### BACKGROUND

While on a runway, an aircraft may experience unintended changes in heading, for example due to external factors such as crosswinds, gusts and variations in a runway surface, as well as aircraft factors such as uneven tire pressure, asymmetric braking, asymmetric engine thrust or component failures.

### SUMMARY

In general, this disclosure describes systems, devices, and techniques for maintaining a vehicle heading on a runway. A system of this disclosure includes processing circuitry configured to determine that the vehicle is active on a runway based at least in part on image data surrounding the vehicle. The processing circuitry is also configured to determine if the vehicle is maintaining the correct heading on the runway. In response to determining that the vehicle is not maintaining the correct heading, the processing circuitry is configured to enact one or more correction procedures to avoid a runway veer-off.

In some examples, this disclosure is directed to a system comprising: avionics circuitry for an aircraft; one or more image sensors configured to acquire image data around the aircraft; and processing circuitry in communication with the avionics circuitry and the one or more image sensors, wherein the processing circuitry is configured to: receive, from the avionics circuitry, operational data of the aircraft; identify, based on the image data, one or more runway features around the aircraft for a runway along which the aircraft is traveling; determine, based on the operational data and the image data, whether the aircraft is maintaining a correct heading along the runway; and control, based on the determination, the aircraft to prevent runway excursion.

In some examples, this disclosure is directed to a method comprising: receiving, by processing circuitry of an avionics system of an aircraft, operational data of the aircraft from avionics circuitry for the aircraft; receiving, by the processing circuitry and from one or more image sensors, image data around the aircraft; identifying, by the processing circuitry and based on the image data, one or more runway features for a runway along which the aircraft is traveling; determining, by the processing circuitry and based on the operational data and the image data, whether the aircraft is maintaining a correct heading along the runway; and controlling, by the processing circuitry and based on the determination, the aircraft to prevent runway excursion.

In some examples, this disclosure is directed to a computer-readable medium comprising instructions that, when executed by processing circuitry of an avionics system of an aircraft, causes the processing circuitry to: receive, from avionics circuitry for the aircraft, operational data of the aircraft; receive, from one or more image sensors, image data around the aircraft; identify, based on the image data, one or more runway features for a runway along which the aircraft is traveling; determine, based on the operational data and the image data, whether the aircraft is maintaining a correct heading along the runway; and control, based on the determination, the aircraft to prevent runway excursion.

The details of one or more examples of the disclosure are set forth in the accompanying drawings and the description below. Other features, objects, and advantages will be apparent from the description, drawings, and claims.

### BRIEF DESCRIPTION OF THE DRAWINGS

FIG. 1 is a conceptual block diagram of a vehicle on a runway, in accordance with some examples of this disclosure.
FIG. 2 is a conceptual block diagram of an example computing system of the ownship vehicle of FIG. 1
FIG. 3 is a conceptual block diagram showing the interaction between an example runway veer-off avoidance system and an example cockpit display.
FIG. 4 is a flowchart illustrating example process for correcting runway veer off by an example vehicle.
FIG. 5A is a conceptual diagram illustrating an example user interface (UI) by the example computing system of FIGS. 1-4.
FIG. 5B is a conceptual diagram illustrating another example UI by the example computing system of FIGS. 1-4.
FIG. 5C is a conceptual diagram illustrating another example UI by the example computing system of FIGS. 1-4.

### DETAILED DESCRIPTION

Various examples of systems, devices, and techniques are described below for identifying and correcting runway veer-off by an ownship vehicle. As an ownship vehicle is landing on, taking off from, and/or taxing along a runway, taxiway, or other roadway. The ownship vehicle may experience a runway excursion, wherein the ownship vehicle veers off, overruns, or otherwise unintentionally exits off a runway surface. Runway excursion may lead to damage to the ownship vehicle and/or may pose a risk of injury to passengers aboard the ownship vehicle. Runway excursions may occur as a result of operator error and/or unexpected changes in a heading of the ownship vehicle (e.g., due to external factors such as cross-winds, gusts and variations in a runway surface, due to aircraft factors such as uneven tire pressure, asymmetric braking, asymmetric engine thrust or component failures).

This disclosure is directed to systems and techniques for identifying and correcting possible runway veer-off based on image data and/or operational data of the ownship vehicle. The systems and techniques described herein may identify a presence of a deviation by the ownship vehicle from a correct heading for a runway and control the ownship vehicle to return towards the correct heading and/or to prevent a runway excursion by the ownship vehicle. The systems and techniques described herein may also output visual and/or aural alerts to an operator of the ownship vehicle, e.g., to warn the operator of a risk of runway excursion and/or to alert the operator of the performance of an autonomous maneuver to avoid a runway excursion.

Although the techniques of this disclosure are primarily described with respect to an aircraft, the techniques may be applicable for other types of vehicles including, but are not limited to, unmanned aerial vehicles (UAVs), automobiles, watercraft, or any other types of vehicles.

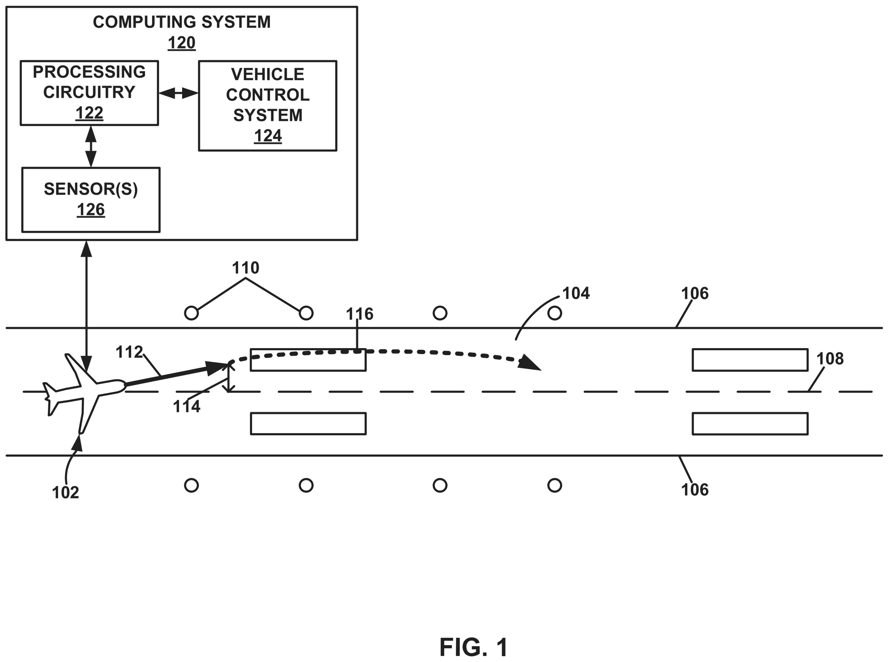

FIG. 1 is a conceptual block diagram of an ownship vehicle 102 on a runway 104, in accordance with some examples of this disclosure. Runway 104 may define edges 106 and a center line 108 extending along a length or runway 104. A plurality of runway lights 110 may be disposed around runway 104 (e.g., next to edges 106). Runway lights 110 may include, but are not limited to, runway edge lights.

Ownship vehicle 102 may include computing system 120. Computing system 120 may be an onboard computing system or an avionics system of ownship vehicle 102. Computing system 120 may include components including, but are not limited to, processing circuitry 122, sensor(s) 126, and vehicle control system 124.

Ownship vehicle 102 may proceed down runway 104 along heading 112. Heading 112 may deviate from center line 108 of runway 104 by a deviation value 114. Due to the deviation between heading 112 and center line 108, ownship vehicle 102 may experience runway excursion (e.g., ownship vehicle 102 may veer off runway 104 and proceed past one edge 106 of runway 104) if ownship vehicle 102 proceeds along heading 112.

Processing circuitry 122 may retrieve and execute instructions to perform the functions for an avoidance system (e.g., a Runway Veer-off Avoidance System (RVAS) of ownship vehicle 102, e.g., to avoid runway excursions by ownship vehicle 102. Computing system 120 may operate the RVAS in addition to or instead of a Runway Overrun Awareness and Alerting System (ROAAS). As a part of the avoidance system, processing circuitry 122 may obtain, e.g., from sensor(s) 126 on ownship vehicle 102, image data of runway 104 and/or operational data of ownship vehicle 102. The image data of runway 104 may include pictures of runway 104 captured by sensor(s) 126. The operational data of ownship vehicle 102 may include operational parameters of ownship vehicle 102 (e.g., yaw of ownship vehicle 102, heading 112 of ownship vehicle 102, angular acceleration of ownship vehicle 102, airspeed of ownship vehicle 102, elevation of ownship vehicle 102, Global Positioning System (GPS) position of ownship vehicle 102, Inertial Reference System (IRS) position of ownship vehicle 102, or wind information of an environment surrounding ownship vehicle 102).

Based on the image data and/or the operational data, processing circuitry 122 may determine whether ownship vehicle 102 is veering off of runway 104. For example, processing circuitry 122 may identify one or more indicators of runway 104 (e.g., center line 108, edges 106, and/or runway lights 110) and determine whether ownship vehicle 102 may experience runway excursion along heading 112 based on a change in position of ownship vehicle 102 relative to the one or more indicators. In some examples, processing circuitry 122 obtains runway data on runway 104 (e.g., from a ground-based computing system) and determines whether ownship vehicle 102 may experience a runway excursion based on the image data, the operational data, and the runway data. The runway data may include dimensions of runway 104, position of runway 104, location of runway 104, and/or weather conditions on runway 104.

In some examples, processing circuitry 122 tracks two or more separate indicators of runway 104 to determine whether ownship vehicle 102 may experience a runway excursion along heading 112. By tracking two or more separate indicators, processing circuitry 122 may determine whether ownship vehicle 102 may experience runway excursion even if some of the two or more separate indicators are not detectable by sensor(s) 126, e.g., due to weather conditions along runway 104. The two or more separate indicators may include, but are not limited to, runway lines (e.g., center line 108) and runway lights 110 of runway 104.

When processing circuitry 122 determines that ownship vehicle 102 may experience runway excursion along heading 112, processing circuitry 122 may determine deviation value 114 between heading 112 and a center of runway 104 (e.g., center line 108). Deviation value 114 may be represented as an angle between heading 112 and a center of runway 104. Processing circuitry 122 may determine that ownship vehicle 102 is not deviating from the center of runway 104 (e.g., that deviation value 114 is zero) based on a determination that heading 112 extends along the center of runway 104). In some examples, there is no angle deviation between heading 112 and a center of runway 104 but vehicle 102 is offset from the center of runway 104 (e.g., heading 112 offset from but extending parallel to center line 108). In such examples, processing circuitry 122 may determine that there is no deviation between ownship vehicle 102 and the center of runway 104 based on a determination that ownship vehicle 102 is within a safe range on runway 104 (e.g., that all wheels of ownship vehicle 102 are within edges 106 of runway 104). In some examples, deviation value 114 is represented by one or more parameters of the operational data of ownship vehicle 102 (e.g., yaw, angular acceleration, airspeed, surrounding weather conditions). Processing circuitry 122 may compare deviation value 114 against a threshold value (alternatively referred to herein as a "threshold deviation") to determine whether heading 112 of ownship vehicle 102 is correctable to avoid runway excursion. The threshold value may correspond to a maximum change in heading 112 by ownship vehicle 102 under the same operational conditions (e.g., same yaw, angular acceleration, airspeed, surrounding weather conditions). The threshold value may depend at least in part on a size and/or taxiing maneuverability of ownship vehicle 102.

Based on a determination that deviation value 114 exceeds the threshold value, processing circuitry 122 may determine that heading 112 cannot be corrected by computing system 120 to avoid a runway excursion. In such examples, processing circuitry 122 may control vehicle control system 124 to apply brakes of ownship vehicle 102, e.g., to stop ownship vehicle 102 prior to the runway excursion. In some examples, processing circuitry 122 controls vehicle control system 124 to provide maximum braking.

Based on a determination that deviation value 114 does not exceed the threshold value, processing circuitry 122 may control vehicle control system 124 to return ownship vehicle 102 to a correct heading along runway 104 (i.e., along a center of runway 104) along adjusted heading 116. Processing circuitry 122 may determine adjusted heading 116 based on one or more of: deviation value 114 between heading 112 and the correct heading, operational data of ownship vehicle 102 (e.g., yaw, angular acceleration, airspeed, ground speed), and/or runway data (e.g., width of runway 104, length of runway 104, position of ownship vehicle 102 along runway 104). Processing circuitry 122 may transmit instructions to vehicle control system 124 to maneuver ownship vehicle 102 along adjusted heading 116 automatically. In some examples, processing circuitry 122 outputs recommended maneuver(s) for adjusted heading 116 to an operator of ownship vehicle 102 via a user interface (UI) of computing system 120 and transmits instructions to vehicle control system 124 based on operator input.

Vehicle control system 124 may control one or more maneuver elements of ownship vehicle 102. The one or more maneuver elements may include, but are not limited to, control surfaces, brakes, nose wheels, engine(s), propeller(s) or the like. Depending on a ground speed of ownship vehicle 102, processing circuitry 122 may transmit different instructions to vehicle control system 124 to control and maneuver ownship vehicle 102 along adjusted heading 116 via different means. For example, processing circuitry 122 may cause vehicle control system 124 to maneuver ownship vehicle 102 along adjusted heading 116 via differential braking and/or nose wheel steering if the ground speed is less than or equal to a threshold speed or via adjustments to control surfaces (e.g., flight control surfaces) and/or hrust of ownship vehicle 102 if the ground speed exceeds the threshold speed.

Processing circuitry 122 may activate or deactivate the avoidance system automatically or in response to operator input. Processing circuitry 122 may cause the UI of computing system 120 to output a status of the avoidance system to the operator. The UI may output the status of the avoidance system as a visual and/or aural signal. In some examples, when processing circuitry 122 cannot detect, via sensor(s) 126, any of the two or more separate indicators, and/or the runway data are not available, processing circuitry 122 may automatically deactivate the avoidance system. When the avoidance system is deactivated, processing circuitry 122 may continuously or periodically monitor received data (e.g., from sensor(s) 126, for runway data). Processing circuitry 122 may re-activate or present a vehicle operator with an option to re-activate the avoidance system based on detection of at least one indicator via sensor(s) 126 and/or based on receiving the runway data.

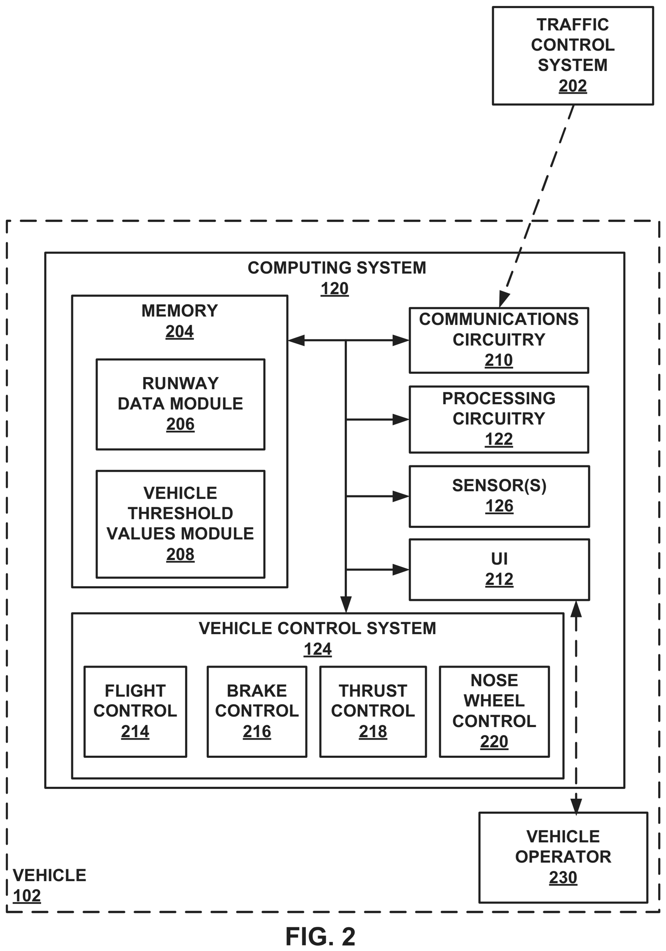

FIG. 2 is a conceptual block diagram of an example computing system 120 of ownship vehicle 102 of FIG. 1. Computing system 120 may include, but is not limited to, memory 204, communications circuitry 210, processing circuitry 122, sensor(s) 126, user interface (UI) 212, and vehicle control system 124.

Communications circuitry 210 may receive information (e.g., runway data, image data, operational data) from an external source (e.g., traffic control system 202, a computing system of another vehicle). Communications circuitry 210 may communicate with the external sources via wireless communications. Wireless communications may be performed by one or more wireless transmission protocols including, but are not limited to, Wi-fi, Bluetooth^{®}, radio communications, infrared communications, Wireless Avionics Intra-Communications (WAIC), or any other wireless transmission protocol. Processing circuitry 122 may store the received information in memory 204. For example, runway data may be stored in runway data module 206 of memory 204.

Processing circuitry 122 may include any suitable arrangement of hardware, software, firmware, or any combination thereof, to perform the techniques attributed to processing circuitry 122 herein. Examples of processing circuitry 122 include any one or more microprocessors, digital signal processors (DSPs), application specific integrated circuits (ASICs), field programmable gate arrays (FPGAs), or any other equivalent integrated or discrete logic circuitry, as well as any combinations of such components. When processing circuitry 122 includes software or firmware, processing circuitry 122 further includes any necessary hardware for storing and executing the software or firmware, such as one or more processors or processing units.

Memory 204 may store program instructions which are executable by processing circuitry 122. When executed by processing circuitry 122, such program instructions may cause processing circuitry 122 to perform the functionalities attributed to it herein (e.g., as a part of an avoidance system of computing system 120). The avoidance system may include, but is not limited to, an RVAS or an ROASS of computing system 120. The program instructions may be embodied in software and/or firmware. Memory 204 may include any volatile, non-volatile, magnetic, optical, or electrical media, such as a random-access memory (RAM), read-only memory (ROM), non-volatile RAM (NVRAM), electrically-erasable programmable ROM (EEPROM), flash memory, or any other digital media. Memory 204 may include one or more modules configured to store specific data. The one or more modules may include, but are not limited to, runway data module 206 or vehicle threshold values module 208.

Sensor(s) 126 may be disposed on or within ownship vehicle 102 and may be configured to sense information from ownship vehicle 102 and/or from an environment around ownship vehicle 102. Sensor(s) 126 may include, but are not limited to, cameras (e.g., a nose wheel camera), inertial measurement units (IMUs), accelerometers, gyroscopes, pressure gauges, altimeters, pressure sensors, positional system receivers (e.g., GPS receivers), external environment sensors, or the like. In some examples, sensor(s) 126 is configured to obtain image data on runway 104 (e.g., may obtain images of runway 104 via one or more cameras). In some examples, sensor(s) 126 is configured to obtain operational data of ownship vehicle 102 (e.g., yaw, angular acceleration, ground speed, airspeed of ownship vehicle 102).

UI 212 may transmit information to and/or receive instructions from vehicle operator 230. Vehicle operator 230 may be a pilot of ownship vehicle 102. UI 212 may include, but is not limited to, display(s), receiver(s), camera(s), microphone(s), or speaker(s). UI 212 may output information as visual, aural, and/or tactile signals. UI 212 may display the visual signal on a heads-up display (HUD) or a primary flight display (PFD) of ownship vehicle 102. Components of UI 212 may be a part of a cockpit display of ownship vehicle 102.

Vehicle control system 124 may include a plurality of control modules for ownship vehicle 102. Each control module may correspond to a different maneuver element on ownship vehicle 102. Vehicle controls system 124 may operate one or more control modules to control movement of ownship vehicle 102. The plurality of control modules may include, but are not limited to, flight control 214, brake control 216, thrust control 218, or nose wheel control 220.

Processing circuitry 122 may receive (e.g., from sensor(s) 126, from UI 212, from communications circuitry 210) one or more types of data. The one or more types of data may include, but are not limited to, image data of runway 104, operational data of ownship vehicle 102, runway data on runway 104, or the like. For examples, processing circuitry 122 may receive image data and operational data from sensor(s) 126 and runway data from an external source via communications circuitry 210. Processing circuitry 122 may identify (e.g., based on the image data and/or the runway data), one or more features of runway 104 (e.g., edges 106, center line 108, runway lights 110) and the positions of the one or more features relative to ownship vehicle 102.

Processing circuitry 122 may continue to track the positions of the one or more features relative to ownship vehicle 102 over time. In some examples, processing circuitry 122 tracks two or more separate features of runway 104, e.g., center line 108 and runway lights 110. Tracking two or more separate features may allow processing circuitry 122 to continue to monitor the position of ownship vehicle 102 relative to runway 104 when computing system 120 cannot receive data on (e.g., sensor(s) 126 cannot sense) at least one feature of runway 104.

In some examples, processing circuitry 122 automatically activates the avoidance system to avoid a runway excursion. In some examples, processing circuitry 122 activates the avoidance system in response to computing system 120 receiving, via UI 212, an input from vehicle operator 230 to activates the avoidance system. When the avoidance system is activated, processing circuitry 122 may automatically control movement of ownship vehicle 102, e.g., as described in greater detail below, to prevent a runway excursion by ownship vehicle 102. In some examples, processing circuitry 122 may cause UI 212 to output recommended maneuvers to vehicle operator 230 to avoid a runway excursion.

When processing circuitry 122 receives information on at least one feature of runway 104, processing circuitry 122 may automatically activate the avoidance system to identify possible runway excursions. When processing circuitry 122 does not receive information on any of the features of runway 104, processing circuitry 122 may deactivate the avoidance system. In some examples, processing circuitry 122 automatically activates the avoidance system until processing circuitry 122 determines that no information on any of the features of runway 104 have been received. In some examples, processing circuitry 122 may activate or deactivate the avoidance system based on input from vehicle operator 230 received by UI 212.

Processing circuitry 122 may cause UI 212 to output a status of the avoidance system to vehicle operator 230. Processing circuitry 122 may cause UI 212 to output the status of the avoidance system periodically and/or after processing circuitry 122 changes a status of the avoidance system (e.g., activates or deactivates the avoidance system). Processing circuitry 122 may cause UI 212 to output the status as an aural signal (e.g., within a cockpit of ownship vehicle 102) and/or as a visual signal (e.g., on a HUD or a PFD displayed to vehicle operator 230.

Processing circuitry 122 may determine heading 112 for ownship vehicle 102. In some examples, processing circuitry 122 determines heading 112 based on a current heading being executed by a navigation system of ownship vehicle 102. Processing circuitry 122 may determine heading 112 based on operational data of ownship vehicle 102 (e.g., obtained via sensor(s) 126). For examples, processing circuitry 122 may determine heading 112 based on a sensed yaw, angular acceleration, bearing, ground speed, and/or operational parameters of ownship vehicle 102.

Processing circuitry 122 may determine, based on heading 112, a likelihood of runway excursion by ownship vehicle 102. Processing circuitry 122 may determine a stopping point for ownship vehicle 102 along runway 104. Processing circuitry 122 determine whether, and at what point along runway 104, ownship vehicle 102 may exit over edges 106 of runway 104 prior to the stopping point, e.g., a runway excursion. The likelihood of runway excursion may depend on deviation value 114 between heading 112 and a center of runway 104 (e.g., center line 108), dimensions of runway 104 (e.g., width of runway 104, length of runway 104), and/or operational parameters of ownship vehicle 102. Processing circuitry 122 may determine the likelihood of runway excursion based on information from image data, operational data of ownship vehicle 102, and/or runway data on runway 104. Based on a determination of a risk of runway excursion, processing circuitry 122 may cause UI 212 to output a warning to vehicle operator 230 of a risk of runway excursion (e.g., on a visual display, as an aural signal). Processing circuitry 122 may continue to monitor a position of ownship vehicle 102 on runway 104 and heading 112 of ownship vehicle 102 and adjust the likelihood of runway excursion based on changes in position and/or heading 112 of ownship vehicle 102.

Processing circuitry 122 may determine whether deviation value 114 of ownship vehicle 102 exceeds a threshold value stored in memory 204, e.g., in vehicle threshold values module 208 of memory 204. Deviation value 114 may be an actual separation distance between heading 112 and the center of runway 104, an angle between heading 112 and the center of runway 104, and/or a value for one or more operational parameters of ownship vehicle 102 indicative of a magnitude of deviation of heading 112 from the center of runway 104.

Depending on the characteristics of ownship vehicle 102 and/or operational parameters of ownship vehicle 102 (e.g., yaw, angular acceleration, ground speed, environment surrounding ownship vehicle 102, a turn radius of ownship vehicle 102 may be limited. When deviation value 114 exceeds the threshold value, the magnitude of deviation of heading 112 from the center of runway 104 may exceed a maximum level of deviation which may be correctable by computing system 120. In such examples, deviation of heading 112 from the center of runway 104 may so large that correction of heading 112 back towards the center of runway 104 along adjusted heading 116 is infeasible. For example, the correction of the deviation may require computing system 120 to cause ownship vehicle 102 to turn with less than the turn radius of ownship vehicle 102.

In such examples, when processing circuitry 122 determines that deviation value 114 exceeds the threshold value, processing circuitry 122 may cause vehicle control system 124 to engage, via brake control 216, brakes on ownship vehicle 102 to slow and/or stop ownship vehicle 102 along runway 104. Processing circuitry 122 may cause vehicle control system 124 to engage the brakes to stop ownship vehicle 102 on runway 104 and prior to a runway excursion by ownship vehicle 102. In some examples, processing circuitry 122 causes vehicle control system 124 to engage, via brake control 216, maximum braking on ownship vehicle 102 to stop ownship vehicle 102.

Based on a determination that deviation value 114 does not exceed the threshold value, processing circuitry 122 may cause vehicle control system 124 to operate, via one or more of the control modules, maneuver element(s) on ownship vehicle 102 to maneuver ownship vehicle 102 back towards the center of runway 104 along adjusted heading 116. In some examples, processing circuitry 122 autonomously controls vehicle control system 124 to control the movement of ownship vehicle 102. In some examples, processing circuitry 122 transmits, via UI 212, maneuver(s) for adjusted heading 116 and/or a request for confirmation from vehicle operator 230 to perform the maneuvers for adjusted heading 116. Processing circuitry 122 may then control vehicle control system 124 to perform the maneuvers based on input from vehicle operator 230.

Depending on a ground speed of ownship vehicle 102, processing circuitry 122 may cause vehicle control system 124 to operate different maneuver element(s) to maneuver ownship vehicle 102 along adjusted heading 116. In some examples, when the ground speed of ownship vehicle 102 is greater than or equal to a threshold speed, processing circuitry 122 causes vehicle control system 124 to adjust, via flight control 214 and/or thrust control 218, control surfaces and/or thrust of ownship vehicle 102, respectively, to maneuver ownship vehicle 102 along adjusted heading 116. Thrust control 218 may include a differential thrust control. In some examples, when the ground speed of ownship vehicle 102 is less than the threshold speed, processing circuitry 122 causes vehicle control system 124 to adjust, via brake control 216 and nose wheel control 220, differential braking of ownship vehicle 102 and nose wheel orientation, respectively, to maneuver ownship vehicle 102 along adjusted heading 116. Brake control 216 may include a differential braking control and nose wheel control 220 may include a nose wheel steering control. The threshold speed may be stored in vehicle threshold values module 208. The threshold speed may depend on characteristics of ownship vehicle 102 (e.g., on a size of ownship vehicle 102, on a taxiing maneuverability of ownship vehicle 102). In some examples, the threshold speed is about 30 knots (e.g., about 55.5 kilometers per hour (km/h), about 34.5 miles per hour (mph)).

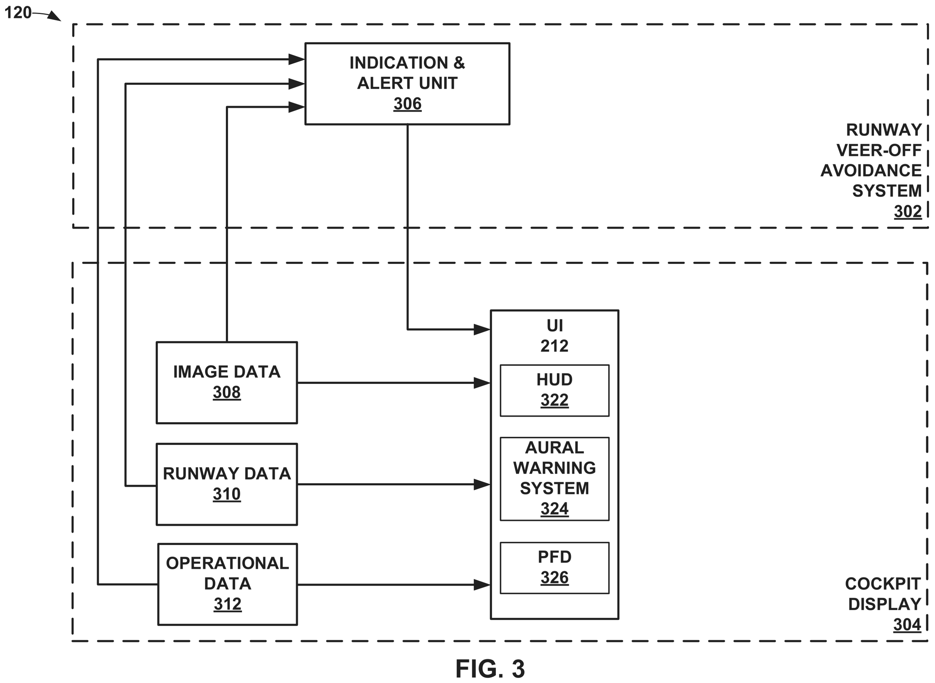

FIG. 3 is a conceptual block diagram showing the interaction between an example runway veer-off avoidance system RVAS 302 (alternatively referred to herein as "RVAS 302") and an example cockpit display 304. RVAS 302 may be a portion of and/or may be implemented by computing system 120 (e.g., may be implemented by processing circuitry 122 of computing system 120).

RVAS 302 may include an indication and alert unit 306 (alternatively referred to herein as "IAU 306"). IAU 306 may include at least a portion of processing circuitry 122 and the functions attributed to IAU 306 may be performed by processing circuitry 122. IAU 306 may receive image data 308, runway data 310, and/or operational data 312. Based on the received image data 308, runway data 310, and/or operational data 312, IAU 306 may determine a likelihood of ownship vehicle 102 experiencing a runway excursion, e.g., in a manner previously described above with respect to FIGS. 1-2. Based on the likelihood of runway excursion, IAU 306 may control ownship vehicle 102 to avoid a runway excursion (e.g., by braking ownship vehicle 102, by adjust heading 112 of ownship vehicle 102 to adjusted heading 116), e.g., in the manner previously described above with respect to FIGS. 1-2.

IAU 306 may be coupled to UI 320 of cockpit display 304. UI 320 may present information (e.g., information on ownship vehicle 102) to vehicle operator 230 (not pictured in FIG. 3). UI 320 may be a part of UI 212 of computing system 120. UI 320 may include, but is not limited to, HUD 322, aural warning system 324, or PFD 326. HUD 322 and PFD 326 may present information to vehicle operator 230 as visual output. Aural warning system 324 may present information to vehicle operator 230 as aural output. UI 320 may output at least a portion of image data 308, runway data 310, or operational data 312 to vehicle operator 230, e.g., via one or more of HUD 322, aural warning system 324, PFD 326, or another display interface.

IAU 306 may cause UI 320 to output a status of RVAS 302 to vehicle operator 230. The status of RVAS 302 may indicate whether RVAS 302 is currently active or activated. When RVAS 302 is active, UI 320 may output an indication (e.g., on HUD 322, on PFD 326, via aural warning system 324) such as "RUNWAY PROTECTION ACTIVE," "RUNWAY PROTECTION ON," "RWY PRT," or the like. When RVAS 302 is not active, UI 320 may output an indication such as "RUNWAY PROTECTION INACTIVE," "RUNWAY PROTECTION OFF," "RWY PRT OFF," or the like. UI 320 may periodically output the indication and/or may output the indication in response to a change in the status of RVAS 302.

IAU 306 may cause UI 320 to transmit, based on a likelihood of runway excursion, a warning to vehicle operator. IAU 306 may cause UI 320 to transmit an indication of any actions by IAU 306 to avoid the runway excursion and/or recommended actions for vehicle operator 230 to avoid the runway excursion. The indication may include, but is not limited to, maneuvers performed by ownship vehicle 102 to avoid runway excursion, recommended maneuvers to avoid runway excursion, or projected time and/or distance to runway excursion.

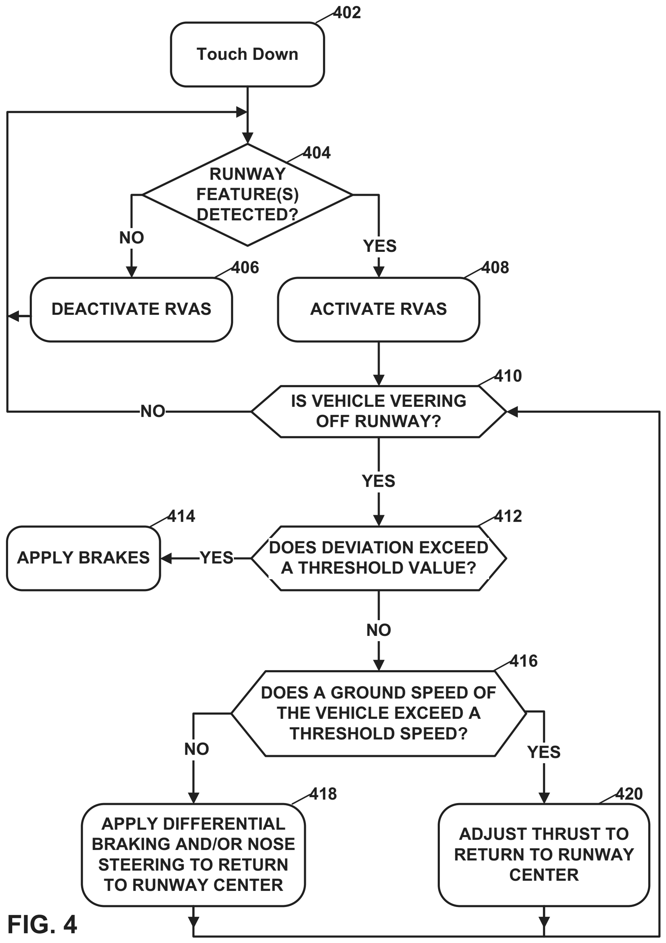

FIG. 4 is a flowchart illustrating example process for correcting runway veer off by example ownship vehicle 102. The example process illustrated in FIG. 4 may be performed by computing system 120 of ownship vehicle 102 (e.g., by processing circuitry 122 of computing system 120), e.g., as a part of RVAS 302 of computing system 120. While the example process is illustrated in FIG. 4 in one particular order, the steps of the process may be performed in one or more other orders.

Ownship vehicle 102 may touch down on runway 104 (402). Computing system 120 may determine whether runway feature(s) are detected (404). Computing system 120 may determine whether runway feature(s) are detected prior to, during, and after touch down of ownship vehicle 102. Computing system 120 may receive (e.g., via sensor(s) 126 of ownship vehicle 102, via an external source) image data 308 and runway data 310 on runway 104. Based on image data 308 and/or runway data 310, computing system 120 may detect runway feature(s) of runway 104. Runway feature(s) may include, but are not limited to, edges 106, center line 108, or runway lights 110. Computing system 120 may detect runway feature(s) on images (e.g., within image data 308) captured by sensor(s) 126 of ownship vehicle 102. Depending on weather conditions around ownship vehicle 102 and/or runway 104, certain runway feature(s) may not be visible and thus may not be detectable by computing system 120.

Based on a determination that computing system 120 did not detect any runway features ("NO" branch of 404), computing system 120 may deactivate RVAS 302 (406). In some examples, computing system 120 activates RVAS 302 automatically, e.g., when ownship vehicle 102 touches down or is about to touch down on runway 104. In such examples, computing system 120 may deactivate RVAS 302 based on the determination that no runway features are detected. In some examples, based on the determination that no runway features are detected, computing system 120 keeps RVAS 302 deactivated. Computing system 120 may continue to monitor runway 104 to determine whether computer system 120 detects runway feature(s) (404) and may activate RVAS 302 ("YES" branch of 408) when runway feature(s) 404 are detected.

Based on a determination that computing system 120 detected runway feature(s) ("YES" branch of 408), computing system 120 may activate RVAS 302 (408). Computing system 120 may activate RVAS 302 in response to computing system 120 detecting at least one runway feature of runway 104 (e.g., edges 106, center line 108, runway lights 110). In some examples, computing system 120 activates RVAS 302 automatically, e.g., when ownship vehicle 102 touches down or is about to touch down on runway 104. In such examples, computing system 120 may keep RVAS 302 activated based on the determination that runway feature(s) are detected.

Computing system 120 may determine whether ownship vehicle 102 is veering off runway 104 (410). Computing system 120 may determine, based on the detected runway feature(s) of runway 104 and/or runway data 310, a center and dimensions of runway 104. Computing system 120 may determine, based on operational data 312 from ownship vehicle 102, heading 112 of ownship vehicle 102. Computing system 120 may compare heading 112 against the center of runway 104 to determine whether ownship vehicle 102 is veering away from the center of runway 104. Computing system 120 may determine, based on operational data 312, a stopping point for ownship vehicle 102 along heading 112. Computing system 120 may determine, based on dimensions of runway 104, whether ownship vehicle 102 may experience a runway excursion (e.g., veering off of runway 104) along heading 112, e.g., prior to the stopping point.

Based on a determination that ownship vehicle 102 is not veering off runway 104 ("NO" branch of 410), computing system 120 may continue to monitor runway feature(s) of runway 104 (e.g., step 404). In some examples, computing system 120 determines that even though heading 112 deviates from the center of runway 104, ownship vehicle 102 would stop along heading 112 prior to leaving runway 104. In such examples, computing system 120 may determine that ownship vehicle 102 is not veering off runway 104.

Based on a determination that ownship vehicle 102 is veering off runway 104 ("YES" branch of 410), computing system 120 may determine whether a deviation of ownship vehicle 102 exceeds a threshold value (412). The deviation of ownship vehicle 102 may be a deviation of heading 112 from the center of runway 104 and may be represented by deviation value 114. Deviation value 114 may be a magnitude of the deviation, an angle defining the deviation, and/or may be value(s) for one or more operational parameters of ownship vehicle 102 (e.g., yaw, angular acceleration, ground speed) representative of the magnitude of the deviation. Computing system 120 may determine whether deviation value 114 exceeds the threshold value. In some examples, computing system 120 generates a deviation score based on deviation value 114 (e.g., based on values for one or more operational parameters) and determines whether the deviation score exceeds a threshold score. The threshold value and/or threshold score may be indicative of a maximum amount of course correction ownship vehicle 102 may perform on runway 104 without causing a runway excursion. The threshold value and/or threshold score may depend on the dimensions of runway 104 and/or the characteristics of ownship vehicle 102 (e.g., a taxiing maneuverability of ownship vehicle 102, a turn radius of ownship vehicle 102).

Based on a determination that the deviation exceeds the threshold value ("YES" branch of 412), computing system 120 may cause vehicle control system 124 to apply brakes (414). When the deviation exceeds the threshold value, ownship vehicle 102 may not be able to return towards the center of runway 104 via vehicle control system 124 of ownship vehicle 102 without veering off of one edge 106 of runway 104 (i.e., without a runway excursion). In such examples, computing system 120 may cause vehicle control system 124 to apply brakes of ownship vehicle 102 to slow down ownship vehicle 102 and stop ownship vehicle 102 on runway 104 (e.g., prior to a runway excursion). In some examples, computing system 120 causes vehicle control system 124 to apply maximum brakes to stop ownship vehicle 102.

Based on a determination that the deviation does not exceed the threshold value ("NO" branch of 412), computing system 120 may determine whether a ground speed of ownship vehicle 102 exceeds a threshold speed (416). The threshold speed may be based on characteristics of ownship vehicle 102 (e.g., size of ownship vehicle 102, taxiing maneuverability of ownship vehicle 102). The threshold speed may be about 30 knots.

Based on a determination that the ground speed does not exceed the threshold speed ("NO" branch of 416), computing system 120 may cause vehicle control system 124 to apply differential braking and/or nose steering to return ownship vehicle 102 to the center of runway 104 (418). Based on a determination that the ground speed exceeds the threshold speed ("YES" branch of 416), computing system 120 may cause vehicle control system 124 to adjust thrust of ownship vehicle 102 to return ownship vehicle 102 to the center of runway 104 (420).

Computing system 120 may iteratively perform steps 404-420 to maintain ownship vehicle 102 around a center or runway 104, e.g., to prevent additional possible runway excursion. Computing system 120 may continue to perform steps 404-420 until ownship vehicle 102 comes to a complete stop, until computing system 120 no longer detects runway feature(s) of runway 104, and/or in response to an input from vehicle operator 230 to deactivate RVAS 302.

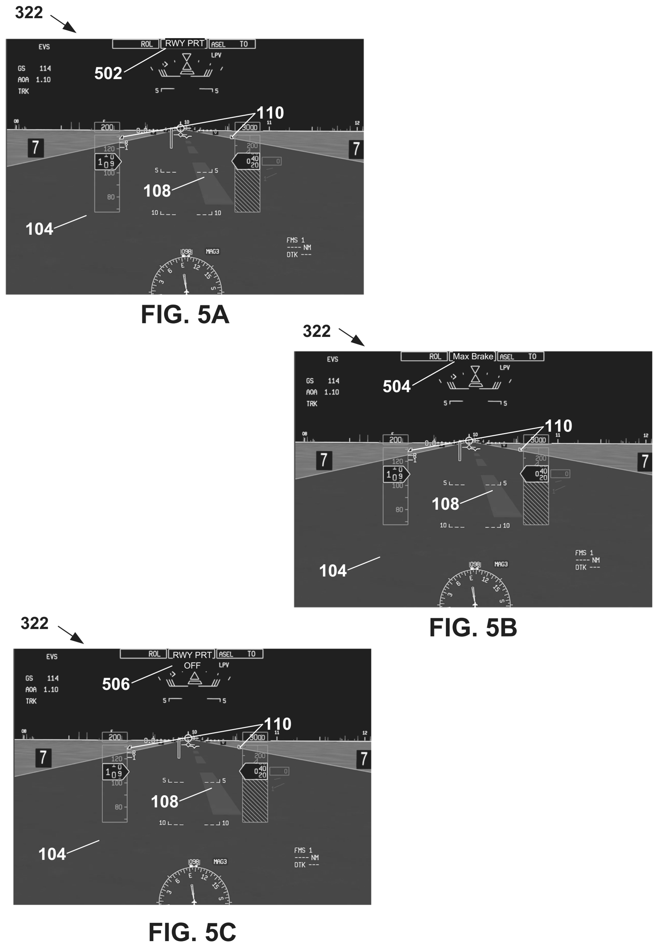

FIGS. 5A-5C is a conceptual diagram illustrating an example UI 320 by computing system 120 of FIGS. 1-4. Each of FIGS. 5A - 5C illustrate an example HUD 322 of UI 320 as presented to vehicle operator 230. In some examples, the example messages illustrated in HUD 322 may be illustrated on another visual display of UI 320 (e.g., on PFD 326 of UI 320).

FIG. 5A illustrates an example of HUD 322 showing that RVAS 302 of computing system 120 is active. HUD 322 may present an image of runway 104, e.g., as captured by a nose wheel camera on ownship vehicle 102. HUD 322 may include on the image one or more features of runway 104, such as center line 108 and runway lights 110. HUD 322 may include notification 502 (e.g., "RWY PRT," as illustrated in FIG. 5A) indicating that RVAS 302 has been activated and/or is currently active. In some examples, notification 502 is accompanied by an aural notification (e.g., from aural warning system 324) also indicating that RVAS 302 has been activated and/or is currently active.

FIG. 5B illustrates an example of HUD 322 showing that RVAS 302 is causing vehicle control system 124 to apply brakes on ownship vehicle 102, e.g., in response a determination that a deviation of ownship vehicle 102 from center line 108 exceeds a threshold value. During braking of ownship vehicle 102, HUD 322 may output notification 504 (e.g., "MAX BRAKE," as illustrated in FIG. 5B) indicating that vehicle control system 124 has applied maximum brakes. In some examples, when RVAS 302 does not cause vehicle control system 124 to apply maximum brakes, notification 504 may indicate vehicle control system 124 has applied brakes, e.g., via a "BRAKE" notification. Notification 504 may be accompanied by a corresponding aural notification indicating that the brakes have been applied.

FIG. 5C illustrates an example of HUD 322 showing that RVAS 302 of computing system 120 has been deactivated. Computing system 120 may autonomously deactivate RVAS 302, e.g., in a manner previously described herein. In some examples, computing system 120 deactivates RVAS 302 in response to input from vehicle operator 230. HUD 322 may include notification 506 (e.g., "RWY PRT OFF," as illustrated in FIG. 5A) indicating that RVAS 302 has been deactivated and/or is currently inactive. In some examples, notification 506 is accompanied by an aural notification indicating that RVAS 302 has been deactivated and/or is currently inactive.

The following numbered examples demonstrate one or more aspects of the disclosure.

Example 1: a system comprising: avionics circuitry for an aircraft; one or more image sensors configured to acquire image data around the aircraft; and processing circuitry in communication with the avionics circuitry and the one or more image sensors, wherein the processing circuitry is configured to: receive, from the avionics circuitry, operational data of the aircraft; identify, based on the image data, one or more runway features around the aircraft for a runway along which the aircraft is traveling; determine, based on the operational data and the image data, whether the aircraft is maintaining a correct heading along the runway; and control, based on the determination, the aircraft to prevent runway excursion.

Example 2: the system of example 1, wherein the operational data includes one or more of a global positioning system (GPS) position of the aircraft, an inertial reference system (IRS) position of the aircraft, a speed of the aircraft, an acceleration of the aircraft, and a heading of the aircraft.

Example 3: the system of any of examples 1 and 2, wherein the processing circuitry is further configured to: receive runway data for the runway, wherein the runway data includes one or more of runway dimensions, a runway position, or weather conditions on the runway; and determine, based on the operational data, the image data, and the runway data, whether the aircraft is maintaining the correct heading.

Example 4: the system of any of examples 1-3, wherein to control the aircraft, the processing circuitry is configured to operate one or more of a flight control, a differential thrust control, a differential braking control, or a nose wheel steering control to prevent runway excursion.

Example 5: the system of example 4, wherein the processing circuitry is configured to operate a different one or more of the flight control, the differential thrust control, the differential braking control, and the nose wheel steering control based on the received operational data of the aircraft.

Example 6: the system of any of examples 4 and 5, wherein the processing circuitry is configured to operate a different one or more of the flight control, the differential thrust control, the differential braking control, and the nose wheel steering control based on the image data.

Example 7: the system of any of examples 1-6, wherein the processing circuitry is further configured to alert a pilot of the aircraft when the system controls the aircraft.

Example 8: the system of any of examples 1-7, further comprising a collision awareness system, and wherein the processing circuitry is configured to, based on the determination, cause the collision awareness system to generate an aural alert.

Example 9: the system of any of examples 1-8, wherein the processing circuitry is further configured to: identify one or more runway edges for the runway along which the aircraft is traveling; determine, based on the operational data, the image data, and the one or more runway edges, whether the aircraft is maintaining the correct heading; and control, based on the determination, the aircraft to prevent runway excursion.

Example 10: the system of any of examples 1-9, wherein the runway lights are runway edge lights.

Example 11: the system of any of examples 1-10, wherein the operational data comprises one or more of: a yaw of the aircraft; an angular acceleration of the aircraft; an airspeed of the aircraft; or wind information of an environment surrounding the aircraft, and wherein the processing circuitry is further configured to: determine, based on the operational data, a deviation for the aircraft; compare the deviation against a threshold deviation; based on a determination that the deviation is less than the threshold deviation, cause the aircraft to return towards a center line of the runway; and based on a determination that the deviation is greater than or equal to the threshold deviation, cause the aircraft to apply brakes to stop the aircraft.

Example 12: a method comprising: receiving, by processing circuitry of an avionics system of an aircraft, operational data of the aircraft from avionics circuitry for the aircraft; receiving, by the processing circuitry and from one or more image sensors, image data around the aircraft; identifying, by the processing circuitry and based on the image data, one or more runway features for a runway along which the aircraft is traveling; determining, by the processing circuitry and based on the operational data and the image data, whether the aircraft is maintaining a correct heading along the runway; and controlling, by the processing circuitry and based on the determination, the aircraft to prevent runway excursion.

Example 13: the method of example 12, further comprising: receiving, by the processing circuitry, runway data for the runway, wherein the runway data comprises one or more of runway dimensions, a runway positions, or weather conditions on the runway; and determining, by the processing circuitry and based on the operational data, the image data, and the runway data, whether the aircraft is maintaining the correct heading.

Example 14: the method of any of examples 12 and 13, wherein controlling the aircraft to prevent runway excursion comprises: operating, by the processing circuitry, one or more of a flight control, a differential thrust control, a differential braking control, or a nose wheel steering control to prevent runway excursion.

Example 15: the method of any of examples 12-14, further comprising: based on the determination, causing, by the processing circuitry, a collision awareness system of the aircraft to generate an aural alert to a pilot for the aircraft.

Example 16: the method of any of examples 12-15, further comprising: identifying, by the processing circuitry, one or more runway edges for the runway; and determining, by the processing circuitry and based on the operational data, the image data, and the one or more runway edges, whether the aircraft is maintaining the correct heading.

Example 17: the method of any of examples 12-16, wherein the operational data comprises one or more of: a yaw of the aircraft; an angular acceleration of the aircraft; an airspeed of the aircraft; or wind information of an environment surrounding the aircraft, and wherein the method further comprises: determining, by the processing circuitry and based on the operational data, a deviation for the aircraft from the correct heading; comparing, by the processing circuitry, the deviation against a threshold deviation; based on a determination that the deviation is less than the threshold deviation, causing, by the processing circuitry, the aircraft to return towards a center line of the runway; and based on a determination that the deviation is greater than or equal to the threshold deviation, causing, by the processing circuitry, the aircraft to apply brakes to stop the aircraft.

Example 18: a computer-readable medium comprising instructions that, when executed by processing circuitry of an avionics system of an aircraft, causes the processing circuitry to: receive, from avionics circuitry for the aircraft, operational data of the aircraft; receive, from one or more image sensors, image data around the aircraft; identify, based on the image data, one or more runway features for a runway along which the aircraft is traveling; determine, based on the operational data and the image data, whether the aircraft is maintaining a correct heading along the runway; and control, based on the determination, the aircraft to prevent runway excursion.

Example 19: the computer-readable medium of example 18, further comprising instructions that causes the processing circuitry to control the aircraft to prevent runway excursion by causing the processing circuitry to: operate one or more of a flight control, a differential thrust control, a differential braking control, or a nose wheel steering control to prevent runway excursion.

Example 20: the computer-readable medium of any of examples 18 and 19, wherein the operational data comprises one or more of: a yaw of the aircraft; an angular acceleration of the aircraft; an airspeed of the aircraft; or wind information of an environment surrounding the aircraft, and wherein the computer-readable medium further comprises instructions that causes the processing circuitry to: determine, based on the operational data, a deviation for the aircraft from the correct heading; compare the deviation against a threshold deviation; based on a determination that the deviation is less than the threshold deviation, cause the aircraft to return towards a center line of the runway; and based on a determination that the deviation is greater than or equal to the threshold deviation, cause the aircraft to apply brakes to stop the aircraft.

The disclosure contemplates computer-readable storage media including instructions to cause a processor to perform any of the functions and techniques described herein. The computer-readable storage media may take the example form of any volatile, non-volatile, magnetic, optical, or electrical media, such as a random-access memory (RAM), read-only memory (ROM), non-volatile RAM (NVRAM), electrically erasable programmable ROM (EEPROM), or flash memory. The computer-readable storage media may be referred to as non-transitory. A computing device may also contain a more portable removable memory type to enable easy data transfer or offline data analysis.

The techniques described in this disclosure may be implemented, at least in part, in hardware, software, firmware or any combination thereof. For example, various aspects of the techniques may be implemented within one or more processors, including one or more microprocessors, digital signal processors (DSPs), application-specific integrated circuits (ASICs), field-programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry.

As used herein, the term "circuitry" refers to an ASIC, an electronic circuit, a processor (shared, dedicated, or group) and memory that execute one or more software or firmware programs, a combinational logic circuit, or other suitable components that provide the described functionality. The term "processing circuitry" refers one or more processors distributed across one or more devices. For example, "processing circuitry" can include a single processor or multiple processors on a device. "Processing circuitry" can also include processors on multiple devices, wherein the operations described herein may be distributed across the processors and devices.

Such hardware, software, firmware may be implemented within the same device or within separate devices to support the various operations and functions described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware or software components. Rather, functionality associated with one or more modules or units may be performed by separate hardware or software components, or integrated within common or separate hardware or software components.

The techniques described in this disclosure may also be embodied or encoded in an article of manufacture including a non-transitory computer-readable storage medium (alternatively referred to herein as "computer-readable medium") encoded with instructions. Instructions embedded or encoded in an article of manufacture including a non-transitory computer-readable storage medium encoded, may cause one or more programmable processors, or other processors, to implement one or more of the techniques described herein, such as when instructions included or encoded in the non-transitory computer-readable storage medium are executed by the one or more processors.

In some examples, a computer-readable storage medium includes non-transitory medium. The term "non-transitory" may indicate that the storage medium is not embodied in a carrier wave or a propagated signal. In certain examples, a non-transitory storage medium may store data that can, over time, change (e.g., in RAM or cache). Elements of devices and circuitry described herein may be programmed with various forms of software. The one or more processors may be implemented at least in part as, or include, one or more executable applications, application modules, libraries, classes, methods, objects, routines, subroutines, firmware, and/or embedded code, for example.

Various examples of the disclosure have been described. Any combination of the described systems, operations, or functions is contemplated. These and other examples are within the scope of the following claims.

## Claims

1. A system comprising:
avionics circuitry for an aircraft;
one or more image sensors configured to acquire image data around the aircraft; and
processing circuitry in communication with the avionics circuitry and the one or more image sensors, wherein the processing circuitry is configured to:
receive, from the avionics circuitry, operational data of the aircraft;
identify, based on the image data, one or more runway features around the aircraft for a runway along which the aircraft is traveling;
determine, based on the operational data and the image data, whether the aircraft is maintaining a correct heading along the runway; and
control, based on the determination, the aircraft to prevent runway excursion.

2. The system of claim 1, wherein the operational data includes one or more of a global positioning system (GPS) position of the aircraft, an inertial reference system (IRS) position of the aircraft, a speed of the aircraft, an acceleration of the aircraft, and a heading of the aircraft.

3. The system of any of claims 1 and 2, wherein the processing circuitry is further configured to:
receive runway data for the runway, wherein the runway data includes one or more of runway dimensions, a runway position, or weather conditions on the runway; and
determine, based on the operational data, the image data, and the runway data, whether the aircraft is maintaining the correct heading.

4. The system of any of claims 1-3, wherein to control the aircraft, the processing circuitry is configured to operate one or more of a flight control, a differential thrust control, a differential braking control, or a nose wheel steering control to prevent runway excursion.

5. The system of claim 4, wherein the processing circuitry is configured to operate a different one or more of the flight control, the differential thrust control, the differential braking control, and the nose wheel steering control based on the received operational data of the aircraft.

6. The system of any of claims 4 and 5, wherein the processing circuitry is configured to operate a different one or more of the flight control, the differential thrust control, the differential braking control, and the nose wheel steering control based on the image data.

7. The system of any of claims 1-6, wherein the processing circuitry is further configured to alert a pilot of the aircraft when the system controls the aircraft.

8. The system of any of claims 1-7, further comprising a collision awareness system, and wherein the processing circuitry is configured to, based on the determination, cause the collision awareness system to generate an aural alert.

9. The system of any of claims 1-8, wherein the processing circuitry is further configured to:
identify one or more runway edges for the runway along which the aircraft is traveling;
determine, based on the operational data, the image data, and the one or more runway edges, whether the aircraft is maintaining the correct heading; and
control, based on the determination, the aircraft to prevent runway excursion.

10. The system of any of claims 1-9, wherein the runway lights are runway edge lights.

11. The system of any of claims 1-10,
wherein the operational data comprises one or more of:
a yaw of the aircraft;
an angular acceleration of the aircraft;
an airspeed of the aircraft; or
wind information of an environment surrounding the aircraft, and
wherein the processing circuitry is further configured to:
determine, based on the operational data, a deviation for the aircraft;
compare the deviation against a threshold deviation;
based on a determination that the deviation is less than the threshold deviation, cause the aircraft to return towards a center line of the runway; and
based on a determination that the deviation is greater than or equal to the threshold deviation, cause the aircraft to apply brakes to stop the aircraft.

12. A computer-readable medium comprising instructions that, when executed by processing circuitry of an avionics system of an aircraft, causes the processing circuitry to:
receive, from avionics circuitry for the aircraft, operational data of the aircraft;
receive, from one or more image sensors, image data around the aircraft;
identify, based on the image data, one or more runway features for a runway along which the aircraft is traveling;
determine, based on the operational data and the image data, whether the aircraft is maintaining a correct heading along the runway; and
control, based on the determination, the aircraft to prevent runway excursion.

13. The computer-readable medium of claim 12, further comprising instructions that causes the processing circuitry to control the aircraft to prevent runway excursion by causing the processing circuitry to:
operate one or more of a flight control, a differential thrust control, a differential braking control, or a nose wheel steering control to prevent runway excursion.

14. The computer-readable medium of any of claims 12 and 13,
wherein the operational data comprises one or more of:
a yaw of the aircraft;
an angular acceleration of the aircraft;
an airspeed of the aircraft; or
wind information of an environment surrounding the aircraft, and
wherein the computer-readable medium further comprises instructions that causes the processing circuitry to:
determine, based on the operational data, a deviation for the aircraft from the correct heading;
compare the deviation against a threshold deviation;
based on a determination that the deviation is less than the threshold deviation, cause the aircraft to return towards a center line of the runway; and
based on a determination that the deviation is greater than or equal to the threshold deviation, cause the aircraft to apply brakes to stop the aircraft.
